(19) Europäisches Patentamt
European Patent Office
Office européen des brevets

(11) **EP 2 648 997 B1**

(12) **EUROPÄISCHE PATENTSCHRIFT**

(45) Veröffentlichungstag und Bekanntmachung des Hinweises auf die Patenterteilung:
**11.05.2016 Patentblatt 2016/19**

(21) Anmeldenummer: **11794473.6**

(22) Anmeldetag: **07.12.2011**

(51) Int Cl.:
**B65G 1/04** *(2006.01)*

(86) Internationale Anmeldenummer:
**PCT/EP2011/072133**

(87) Internationale Veröffentlichungsnummer:
**WO 2012/076624 (14.06.2012 Gazette 2012/24)**

(54) **UNIVERSELLES LASTAUFNAHMEMITTEL FÜR PALETTENLOSE HANDHABUNG VON PALETTEN-LADEGÜTERN**

UNIVERSAL LOAD-LIFTING MEANS FOR THE PALLETLESS HANDLING OF GOODS TO BE LOADED ONTO PALLETS

MOYEN DE RÉCEPTION DE CHARGE UNIVERSEL POUR LA MANUTENTION SANS PALETTE DE PRODUITS À EMMAGASINER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.12.2010 DE 102010054968**

(43) Veröffentlichungstag der Anmeldung:
**16.10.2013 Patentblatt 2013/42**

(73) Patentinhaber: **SSI Schäfer Noell GmbH Lager-und Systemtechnik**
**97232 Giebelstadt (DE)**

(72) Erfinder: **LALESSE, Rob**
**NL-6904 Zevenaar (NL)**

(74) Vertreter: **Witte, Weller & Partner Patentanwälte mbB**
**Postfach 10 54 62**
**70047 Stuttgart (DE)**

(56) Entgegenhaltungen:
| | |
|---|---|
| **EP-A2- 1 637 476** | **WO-A1-2005/000718** |
| **WO-A1-2010/090515** | **DE-A1- 1 781 068** |
| **DE-A1- 19 801 856** | **DE-U1- 20 012 197** |
| **JP-A- 59 207 304** | **JP-A- 61 183 034** |

**Beschreibung**

Die vorliegende Erfindung betrifft ein universelles Lastaufnahmemittel für ein (Flur-)Förderzeug, insbesondere ein Regalbediengerät, zur palettenlosen Aufnahme und Abgabe eines Paletten-Ladeguts von einem oder an einen Übergabeplatz, insbesondere einen Regallagerplatz, wobei das Ladegut üblicherweise 500 bis 1500 kg wiegt oder schwerer ist. Die Erfindung betrifft ferner ein Verfahren zum palettenlosen Aufnehmen eines Paletten-Ladeguts von einem Übergabeplatz mittels des universellen Lastaufnahmemittels.

In der WO 2010/090515 A1 wird ein Verfahren zum Kommissionieren verschiedener Stückgüter offenbart, die gemäß einem Kommissionierauftrag zusammengestellt werden. Die Stückgüter werden in einem Lager einzeln auf kammartig ausgebildeten Fachböden bevorratet. Die Stückgüter werden mehrfachtief auf den Fachböden eines Regals bereitgestellt. Ein Regalbediengerät, das die Stückgüter ein- und auslagert, weist zwei beabstandete Lastaufnahmemittel auf, die zur Aufnahme mehrerer Stückgüter, insbesondere von Reihen aus Stückgütern, ausgebildet sind. Die Lastaufnahmemittel weisen üblicherweise jeweils drei in Querrichtung ausfahrbare Zinken auf, die derart zueinander beabstandet sind, dass die Zinken in Täler der kammartig ausgebildeten Fachböden eingeführt werden können, um bevorratete Stückgüter zu untergreifen. Die Zinken selbst sind in U-förmigen Profilen gelagert, die wiederum fest auf einem Hubtisch des Regalbediengeräts befestigt sind. Der Abstand der Täler der kammartigen Fachböden bestimmt den Abstand der Zinken und der U-förmigen Profile. An vertikalen Schenkeln der U-förmigen Profile sind Riemenförderer vorgesehen, die leicht über die vertikalen U-Schenkel überstehen. Wenn ein Stückgut aus dem Fachboden mittels der Zinken auf die Riemenförderer gefördert werden soll, werden die Zinken in Querrichtung eingefahren, nachdem das Lastaufnahmemittel mittels des Regalbediengeräts leicht angehoben wird. Die Zinken liegen tiefer als die Riemen. Sobald das Stückgut an die Stirnseite der Riemen stößt, werden die Riemen aktiviert, um das Stückgut von den Zinken auf die Riemen zu ziehen. Deshalb ist im Bereich der Stirnseiten der Riemen ein entsprechender Sensor vorgesehen, der ein sich näherndes Stückgut, das auf dem Zinken steht, erfasst. Einen Relativhub zwischen den Zinken und den Riemen gibt es nicht.

Obwohl die kammartige Lösung gut zum Aufnehmen und Abgeben von (kleineren) einzelnen Stückgütern geeignet ist, ist die Lösung für größere und schwerere Ladegüter, wie z.B. Paletten-Ladegüter, ungeeignet, da die Zinken nahezu über ihre vollständige Länge, die im Übrigen der Länge der U-förmigen Profile auf dem Hubtisch und mitunter der Länge des Hubtisches selbst entspricht, ausgefahren werden. Die dabei auftretenden Momente können von den Zinken allein nicht mehr getragen werden, wenn z.B. ein Holzbretterstapel mit einem Gewicht von z.B. 750 kg ein- oder ausgelagert werden soll.

JP 59207304 beschreibt einen gattungsgemäßen Hubwagen.

Daher stellt sich die Aufgabe, ein universelles Lastaufnahmemittel bereitzustellen, das zur Handhabung von Paletten-Ladegütern, insbesondere wenn gar keine Paletten (Ladehilfsmittel) eingesetzt werden, geeignet ist. Vorzugsweise soll das Lastaufnahmemittel an unterschiedliche Ladegüter anpassbar sein, die unterschiedlich dimensionierte Grundflächen mit unterschiedlichen zulässigen Angriffspunkten zum Anheben der Last haben.

Des Weiteren ist es eine Aufgabe, ein Verfahren zum palettenlosen Aufnehmen eines Paletten-Ladeguts von einem Übergabeplatz (d.h. einem Transferplatz zur Aufnahme/Abgabe) mittels eines universellen Lastaufnahmemittels bereitzustellen.

Diese Aufgabe wird durch den Hubwagen entsprechend des Anspruchs 1 gelöst. Es wird ein universelles Lastaufnahmemittel für ein Förderzeug, insbesondere ein Regalbediengerät, zur palettenlosen Aufnahme und Abgabe eines Paletten-Ladeguts von einem oder an einen Übergabeplatz, insbesondere einen Regallagerplatz bereitgestellt, wobei das Ladegut schwer ist und zum Ein- und Auslagern mittels eines Hubwerks des Förderzeugs auf den Übergabeplatz abgesenkt oder von dem Übergabeplatz angehoben wird, aufweisend: einen Längsträger, der im Wesentlichen in einer Längsrichtung orientiert ist und der mittels eines Längsträgerantriebs in einer Querrichtung querverschieblich auf einem Hubwagen des Förderzeugs befestigbar ist; eine Vielzahl von Zinken, die im Wesentlichen in der Querrichtung orientiert sind und die mittels eines Zinkenantriebs querverschieblich auf dem Längsträger gelagert sind, um die Zinken in der Querrichtung relativ zum Längsträger ein- und auszufahren; und eine Vielzahl von Linearförderern, die im Wesentlichen in der Querrichtung orientiert sind, wobei jedem Zinken jeweils ein Linearförderer zugeordnet ist, wobei die Linearförderer mittels eines Linearfördererantriebs bewegt werden und wobei die Linearförderer vertikal über die Zinken vorstehen, um das Ladegut auf den Linearförderern zu tragen und in der Querrichtung relativ zu den Zinken zu bewegen; wobei die Zinken in der Längsrichtung mittels eines Breitenverstellantriebs längsverschieblich zueinander auf dem Längsträger gelagert sind. Insbesondere weist die Vielzahl von Zinken ein Paar längsverschieblicher äußerer Zinken auf, zwischen denen mehrere innere Zinken angeordnet sind, wobei mindestens einer der inneren Zinken längsverschieblich ist. Alternativ könnten mindestens drei Zinken der Vielzahl von Zinken längsverschieblich sein.

Ein großer Vorteil der Erfindung ist, dass ein Ladegut, das normalerweise als eine Einheit auf Paletten bevorratet wird, ladungsträgerlos, insbesondere palettenlos, von Förderzeugen, wie zum Beispiel Regalbediengeräten, mittels eines geeignet ausgestatteten Lastaufnahmemittels gehandhabt werden kann. Das Lastaufnahmemittel ist so ausgestaltet, dass es unter beliebig auswählbare Punkt unterhalb des Ladeguts greifen kann, um das Ladegut anzuheben und zu transferieren. Fest vorgegebene Angriffspunkte, wie sie zum Beispiel bei einer Europool-Palette definiert sind, sind bei der vorliegenden Erfindung nicht erforderlich, um die mitunter sehr großen und schweren Ladegüter zu handhaben. Um dieses Ziel zu erreichen, sind die Zinken in Längsrichtung des Förderzeugs relativ zueinander verstellbar. Der Betreiber des Förderzeugs kann über die Steuerung des Förderzeugs festlegen, wo unterhalb des Ladeguts die Zinken angreifen. Dies kann sich von Ladegut zu Ladegut unterscheiden. Man ist in diesem Sinne flexibel.

Das Lastaufnahmemittel ist dabei so dimensioniert, dass nicht (nur) einzelne Stückgüter, die üblicherweise in größeren Mengen auf Paletten bevorratet werden, sondern dass eine Paletten-Ladeguteinheit handhabbar ist. Derartige Ladegüter können schnell bis zu 1500 kg oder mehr wiegen. Bei derartig hohen Gewichten ist es schwierig, die Last weit auskragend zu halten, da dort die Kippmomente schnell sehr groß werden. Übliche Lastaufnahmemittel, die zur Handhabung von Stückgütern ausgelegt sind, können derartig hohe Lasten überhaupt nicht tragen. Die entsprechenden Sicherheitsvorschriften sind zu beachten.

Das Aufnehmen oder Abgeben der oben beschriebenen palettenlosen Ladegüter erfolgt sehr schnell. Während der Längsträger ausgefahren wird, können sowohl die Zinken als auch die Linearförderer simultan betätigt werden. In diesem Sinne kommt es zu einer Überlagerung von drei Bewegungen in der Z-Richtung. Anders als im Stand der Technik, wo die Teleskopgabelabschnitte sequenziell ausgefahren werden, können vorliegend individuell ansteuerbare Komponenten (Längsträger, Zinken und Linearförderer) gleichzeitig betätigt werden.

Vorzugsweise erstreckt sich der Längsträger im Wesentlichen über eine gesamte Länge des Hubwagens und ist entlang von Linearführungen, vorzugsweise Schienen, auf dem Hubwagen verfahrbar.

Durch die große Länge des Lastaufnahmemittels (in X-Richtung) können sowohl sehr kurz als auch sehr lange Ladegüter ohne Probleme gehandhabt werden. Durch die Längsverschieblichkeit der Zinken können unterschiedlich lange Ladegüter alle mit ein und demselben Lastaufnahmemittel gehandhabt werden. Sind die Ladegüter relativ klein, können mitunter sogar mehrere Ladegüter nebeneinander gleichzeitig gehandhabt werden.

Bei einer besonderen Ausgestaltung sind die Zinken derart in der Längsrichtung zueinander verfahrbar, dass die Zinken im Wesentlichen an jedem beliebigen Punkt unter das zur Aufnahme oder Abgabe bereitgestellten Ladegut bewegbar sind.

In diesem Merkmal drückt sich die Flexibilität der Handhabung der Ladegüter aus.

Weiter ist es von Vorteil, wenn die Zinken paarweise vorgesehen sind.

Paarweise vorgesehene Zinken erhöhen die Kontaktfläche zwischen dem Lastaufnahmemittel und dem zu bewegenden Ladegut. Die Flächenpressung im Bereich der Kontaktstellen reduziert sich. Eine Beschädigung des Ladeguts durch "punktuellen" Auflagedruck ist weniger wahrscheinlich.

Bei einer weiteren bevorzugten Ausführungsform ist ein mittig angeordneter Zinken in der Längsrichtung starr am Längsträger befestigt und nach außen nachfolgende Zinken sind paarweise mit jeweils einem gemeinsamen Breitenverstellantrieb in der Längsrichtung - symmetrisch relativ zum mittig angeordneten Zinken - versetzbar, wobei derart paarweise versetzbare Zinkenpaare jeweils vorzugsweise über eine Spindel (oder eine Kette, ein Zahnritzel, einen Zylinder oder Ähnliches) miteinander gekoppelt sind, so dass paarweise versetzbare Zinkenpaare entlang ihrer jeweiligen Spindel geführt sind.

Diese Ausgestaltung hat den Vorteil, dass die Zinken symmetrisch zum starr angeordneten mittigen Zinken verstellbar sind. Dies wiederum hat zur Folge, dass Zinkenpaare gebildet werden können, die mit einem gemeinsamen Antrieb verstellt werden. Dadurch reduziert sich die Anzahl der Antriebe, die zum Längsverstellen der Zinken untereinander benötigt werden. Wenn Spindeln zum Zwecke eines Antriebs eingesetzt werden, können die Spindeln auch gleichzeitig als Linearführung dienen.

Erfindunggemäß weist jeder Linearförderer ein in sich geschlossenes Zug- bzw. Fördermittelmittel auf, das mittels Umlenkrollen, die jeweils in einem der Zinken gelagert sind, endlos um den einen Zinken läuft und das den Linearförderer derart mechanisch an den einen Zinken koppelt, dass sich das Zugmittel beim Ein- oder Ausfahren des einen Zinkens mitbewegt.

Auf diese Weise treibt also die Bewegung des Zinkens auch das Zugmittel der Linearförderer (z.B. Riemen, Kette, Seil, etc) an. Dies bedeutet mit anderen Worten, dass das Zugmittel der Linearförderer nicht aktiv angetrieben werden muss, um einen Versatz des darauf ruhenden Ladeguts zu erzielen. Auf einen Linearfördererantrieb kann gegebenenfalls vollständig verzichtet werden.

Weiter ist es von Vorteil, wenn der Linearförderantrieb eine Antriebseinheit und eine Antriebswelle aufweist, wobei die Antriebswelle im Längsträger gelagert ist.

Vorzugsweise ist eine einzige Antriebswelle vorgesehen, die alle Linearförderer antreibt. Dadurch wird erreicht, dass die Linearförderer synchron angetrieben sind. Ein auf den Linearförderern stehendes Ladegut bewegt sich dann parallel zur Z-Richtung beim Ein- oder Auslagern des Ladeguts. Eine Rotation des Ladeguts auf dem Lastaufnahmehilfsmittel wird so vermieden. Die Ladegüter werden in vorgegebener Ausrichtung ein- bzw. ausgelagert. Damit kann die Lagerdichte erhöht werden, indem der Abstand zwischen eingelagerten Ladegütern verringert wird.

Insbesondere ist eine Zinkenantriebswelle des Zinkenantriebs im Längsträger gelagert. Auch hier kann eine einzige Antriebswelle alle Zinken hinsichtlich einer Bewegung in der Z-Richtung synchron antreiben. Die Anzahl der benötigten Zinkenantriebe lässt sich auf eins reduzieren. Die Bewegung der Zinken erfolgt synchron. Die oben in Zusammenhang mit den Linearförderern beschriebenen Vorteile kommen hier gleichfalls zum Tragen.

Weiter ist es bevorzugt, wenn der Zinkenantrieb ein Zahnrad aufweist, das auf der im Längsträger gelagerten Zinkenantriebswelle sitzt und mit einem Zahnprofil kämmt, das an einer Unterseite eines jeden Zinkens vorgesehen ist.

Ferner wird die oben definierte Aufgabe durch ein Regalbediengerät nach Anspruch 9 mit einem Hubwerk und einem Hubwagen gemäß der Erfindung gelöst.

Eine weitere Lösung der oben definierten Aufgabe wird in Form einer Lageranlage nach Anspruch 10 mit einem Regal, einem Regalbediengerät und einem Förderer bereitgestellt, wobei das Regalbediengerät mit einem Hubwagen gemäß der Erfindung ausgestattet ist und in der Längsrichtung entlang des Regals in horizontaler und vertikaler Richtung verfahrbar ist, um Paletten-Ladegüter palettenlos zwischen Regallagerplätzen und dem Förderer auszutauschen, der an das Regel grenzt.

Des Weiteren wird die oben definierte Aufgabe durch ein Verfahren nach Anspruch 11 zum palettenlosen Aufnehmen eines Paletten-Ladeguts von einem Übergabeplatz mittels eines Hubwagens mit einem universellen Lastaufnahmemittels gelöst, wobei das Verfahren die folgenden Schritte aufweist: Positionieren des Lastaufnahmemittels in Längsrichtung und Höhenrichtung vor einem Übergabeplatz; Positionieren der Zinken in der Längsrichtung mittels eines breiten Verstellantriebs, so dass die Zinken unter jeden Punkt unter dem Ladegut greifen können; Ausfahren des Längsträgers und/oder der Zinken in Querrichtung, bis das Ladegut ausreichend weit untergriffen ist; Bewegen des Lastaufnahmemittels in der Höhenrichtung derart, dass das Ladegut vom Übergabeplatz abhebt; und Einfahren des Längsträgers und/oder der Zinken, bis das Ladegut in der Querrichtung Z in einer Transportposition ist.

Ferner ist es bevorzugt, wenn die Linearförderer beim Einfahren des Längsträgers und/oder der Zinken derart bewegt werden, dass sich das Ladungsgut entgegengesetzt zu einer Einfahrrichtung des Längsträgers und/oder der Zinken bewegt.

Auf diese Weise ist es möglich, Zeit zu sparen, da die Bewegungen simultan erfolgen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1 eine perspektivische Ansicht eines Lastaufnahmemittels gemäß der Erfindung;

Fig. 2 eine Draufsicht auf das Lastaufnahmemittel der Fig. 1;

Fig. 3A-3D eine Seitenansicht und Draufsicht auf ein maximal ausgefahrenes Lastaufnahmemittel der Fig. 1 und 2 (Fig. 3A und B) sowie eine Seitenansicht und Draufsicht auf das Lastaufnahmemittel in einer Normalstellung (Fig. 3C und D);

Fig. 4 eine seitliche Teilansicht eines Zinkens inklusive Zinkenantrieb und Linearantrieb;

Fig. 5A-5B den Zinken der Fig. 4 in einer Normalstellung (Fig. 5A) und in einer maximal ausgefahrenen Stellung (Fig. 5B);

Fig. 6 einen schematisiert dargestellten Zinken inklusive Ladegut in einer Normalstellung (Fig. 6A) und in einer maximal ausgefahrenen Stellung (Fig. 6B);

Fig. 7A-7C einen Vorgang, bei dem mit dem Lastaufnahmemittel der Erfindung ein Paletten-Ladegut aus einem kammartigen Fachboden eines Lagerregals aufgenommen wird;

Fig. 8 eine Draufsicht auf eine Lageranlage 100, bei der das erfindungsgemäße Lastaufnahmemittel zum Einsatz kommt; und

Fig. 9 ein Flussdiagramm des Verfahrens gemäß der Erfindung.

Bei der Wahl der Orientierungsrichtungen hat man sich in der nachfolgenden Beschreibung an die in der Lagerlogistik üblichen Bezeichnungen gehalten, so dass die (horizontale) Länge entlang einer Längsseite eines Regals mit X, die Tiefe eines Regals mit Z und die (vertikale) Höhe eines Regals mit Y bezeichnet wird. Im Nachfolgenden wird das so definierte Bezugssystem, das im Wesentlichen bei Regalbediengeräten angewendet wird, auch auf dessen Lastaufnahmemittel angewendet.

In der nachfolgenden Figurenbeschreibung wird ein erfindungsgemäßes Lastaufnahmemittel (nachfolgend auch kurz als "LAM" bezeichnet) unabhängig von seiner Ausgestaltung immer mit dem Bezugzeichen 10 versehen werden.

Das LAM 10 kann ein Teil eines (Flur-)Förderzeugs sein, mit dem eine Lagereinheit aufgenommen oder abgegeben wird. Eine Lagereinheit ist diejenige Handhabungseinheit (z.B. Palette, Behälter, Tablar, Karton, etc.), die in einem Lagerbereich eingesetzt wird. Eine Lagereinheit ist üblicherweise artikelrein (z.B. Palette mit einer Vielzahl gleicher Stückgüter, die als Stückgutstapel bevorratet sind). Sie kann aber auch gemischt sein ("mixed pallet"). Die Lagereinheit umfasst die Artikel sowie üblicherweise ein Lager- bzw. Ladehilfsmittel. Alternativ werden die Ladehilfsmittel auch als Ladungsträger bezeichnet und stellen somit ein tragendes Mittel zur Zusammenfassung von Artikeln oder Gütern zu einer Ladeeinheit bzw. einem Ladegut dar. Ein Ladungsträger ist streng genommen ein tragendes Ladehilfsmittel, welches ein Ladegut ausschließlich von unten unterstützt. Bekanntestes Beispiel für einen Ladungsträger ist eine Flachpalette, beispielsweise in Form einer Europool-Palette. Die vorliegende Erfindung kommt auch ohne Ladungsträger aus, so dass Ladegut ladehilfsmittellos ("palettenlos") vom LAM 10 gehandhabt werden kann.

Ein konventionelles Lastaufnahmemittel zur Handhabung von Paletten-Ladegütern, die auf einer Palette bereitgestellt werden, sind beispielsweise Teleskopgabeln. Eine Teleskopgabel besitzt mehrere ineinander verschachtelte Gabelabschnitte, die ausgefahren werden können, um eine große Handhabungstiefe zu erzielen. Die Teleskopgabel benötigt aber genau definierte Kontaktpunkte und Öffnungen an bzw. in dem Ladungsträger, wie z.B. einer Europool-Palette, um die Europool-Palette bewegen zu können.

Ein Förderzeug ist ein bewegliches Fördermittel, das einem horizontalen und vertikalen innerbetrieblichen Transport von Ladegütern dient. Wenn das Förderzeug flurgebunden betrieben wird, d.h. auf dem Boden fährt, nennt man es Flurförderzeug. Wenn das Förderzeug an einer Decke befestigt ist oder z.B. an einer aufgeständerten Stahlkonstruktion hängt, spricht man von einem flurfreien Förderzeug. Die vorliegende Erfindung ist sowohl auf flurgebundene als auch flurfreie Förderzeuge anwendbar, aber insbesondere auf Regalbediengeräte und Verschiebewägen.

Ein Regalbediengerät (auch "Regalförderzeug" genannt) ist in der Regel flurgebunden und meistens schienengeführt, um Ladegüter z.B. aus einem Regal auszulagern oder Ladegüter in das Regal einzulagern. Das Regalbediengerät kann längs in einer Regalgasse zwischen zwei benachbart angeordneten Regalen (schienengeführt) horizontal verfahren werden. Es weist ein Fahrwerk, einen oder mehrere Masten, mindestens ein Hubwerk, einen Hubtisch bzw. -wagen sowie ein Lastaufnahmemittel auf. Mit dem Hubwerk kann der Hubtisch, der eine Art Plattform darstellt, entlang dem einen bzw. den mehreren Masten vertikal verfahren werden, während das Regalbediengerät in Längsrichtung X des Regals horizontal mit dem Fahrwerk verfahren wird. Auf dem Hubtisch, der auch rahmenartig ausgebildet sein kann, ist das Lastaufnahmemittel montiert, mit dem die Lagergüter ein- und ausgelagert werden. Das Lastaufnahmemittel ist dazu zumindest in der Querrichtung Z beweglich. Unabhängig davon, ob eine Abgabe oder Aufnahme eines Ladeguts erfolgt, wird örtlich nachfolgend von einem "Übergabeplatz" gesprochen werden, wo eine derartige Aktion stattfindet.

Das LAM 10 der vorliegenden Erfindung ist dazu ausgelegt, so genannte "Paletten-Ladegüter" palettenlos zu handhaben. Unter einem Paletten-Ladegut wird ein Ladegut (bzw. die Ladung) verstanden, das üblicherweise als eine kompakte Einheit gesichert auf einer Palette gelagert und transportiert wird. So können z.B. mehrere Kartons in einer Folie zu einem Block verschweißt sein, der dann als kompakte Handhabungseinheit dient. Die Kartons innerhalb der kompakten Handhabungseinheit können verschieden sein. Eine derartige kompakte Einheit ist nicht mit einem Stückgut zu verwechseln. Ein Paletten-Ladegut kann durch eine Vielzahl artikelreiner oder auch gemischter Stückgüter gebildet werden, die z.B. in Form von Lagen übereinander geschichtet als Stückgutstapel auf der Palette bevorratet sind. Ein einzelnes, ungesichertes Stückgut ist aber üblicherweise bedeutend kleiner und leichter als ein Paletten-Ladegut. Wenn im Nachfolgenden von Ladegütern gesprochen wird, sind Paletten-Ladegüter im oben erläuterten Sinne gemeint. Es kann sich dabei z.B. auch um einen Stapel Bretter handeln, der normalerweise auf einer Palette bevorratet wird. Schüttgüter können ebenfalls gehandhabt werden, solange sie als eine kompakte Einheit (z.B. in einem Sack) gesichert sind.

Die vorliegende Erfindung kommt insbesondere in Lageranlagen von Möbelhäusern zum Einsatz, wo verschiedene Produkte in einem demontierten und/oder zusammengefalteten Zustand stapelweise als (Handhabungs)Einheit auf Paletten bevorratet werden.

Ladegüter, die im Rahmen der Erfindung gehandhabt werden, weisen üblicherweise Längen zwischen 400 und 1200 mm auf. Die Höhe kann größer als 2200 mm sein. Die Breiten liegen üblicherweise zwischen 350 und 2500 mm. Bei den Ladegütern kann es sich auch um Kartons oder Ähnliches handeln. Flexibel unter den Ladungsgütern anbringbare Füße, wie z.B. Pappfüße oder -keile, werden nicht als Ladehilfsmittel im klassischen Sinne angesehen. Ladehilfsmittel im klassischen Sinne weisen fix definierte Orte oder Bereiche auf, wo das Lastaufnahmemittel in Kontakt mit dem Ladehilfsmittel treten darf oder nicht. Diese vordefinierten Bereiche bestimmen unter anderem ein Lagerplatzraster im Regal, da das Lastaufnahmemittel somit nur an fest vordefinierten Positionen Ladehilfsmittel ein- oder auslagern kann. Bei der vorliegenden Erfindung ist das anders. Die Stützelemente (wie z.B. Füße, Keile, "Loading Ledges" etc.) können beliebig unter den Ladegütern, vorzugsweise entfernbar, montiert werden. Jedes Ladegut kann diesbezüglich anders als die restlichen Ladegüter beschaffen sein. Die Handhabung derartiger Ladegüter ist in diesem Sinne nicht einheitlich und somit nicht standardisiert. Lagerplätze können deshalb frei definiert werden. Das Lagerplatzraster reduziert sich drastisch. Mit der vorliegenden Erfindung ist ein Rastermaß von z.B. 75 mm erreichbar.

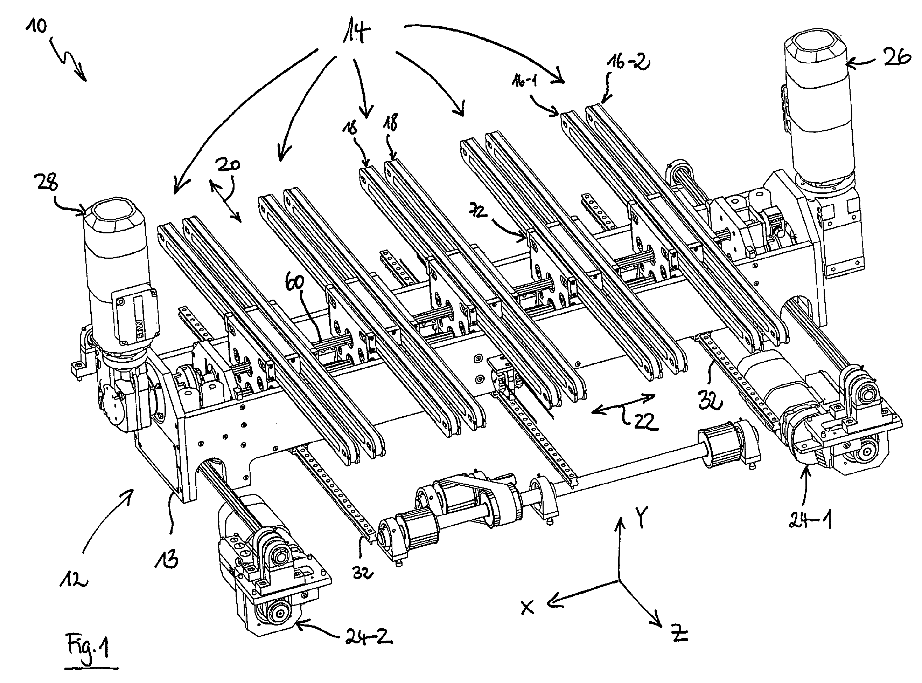

Fig. 1 zeigt eine perspektivische Ansicht eines LAM 10 der Erfindung ohne Ladegut. Das LAM 10 erstreckt sich im Wesentlichen in einer Längsrichtung X und weist einen Längsträger 12 auf. Der Längsträger 12 ist hier exemplarisch in Form einer Wanne 13 ausgeführt, in der eine Vielzahl von Zinken 14 längsverschieblich, d.h. parallel zur X-Achse, gelagert sind. In Fig. 1 sind exemplarisch fünf Zinken 14 gezeigt, die sich jeweils im Wesentlichen in der Querrichtung Z erstrecken. Es können mehr oder weniger Zinken 14 eingesetzt werden. Im Nachfolgenden werden auch Zinkenpaare, die mehrere direkt benachbarte und einander zugeordnete Einzelzinken aufweisen können, als Zinken 14 bezeichnet werden. In der Fig. 1 weist jeder Zinken 14 exemplarisch zwei als Einheit betätigbare Einzelzinken 16-1 und 16-2 auf, die hier jeweils in der Längsrichtung X gleich beabstandet zueinander sind. In diesem Sinne weisen die Zinken 14 auch eine gewisse Breite in Längsrichtung X auf. Die Zinken 14 umfassen ferner jeweils mindestens einen Linearförderer 18. In Fig. 1 ist jedem Einzelzinken 16 ein Linearförderer 18 (z.B. Zahnriemenförderer, Gurtförderer, etc.) zugeordnet.

Die Zinken 14 sind querverschieblich auf dem bzw. in dem Längsträger 12 gelagert, wie es durch einen Pfeil 20 angedeutet ist. Die Zinken 14 können sowohl nach links als auch nach rechts in der Z-Richtung ein- und ausgefahren werden.

Die Zinken 14 sind untereinander auch längsverschieblich auf dem bzw. in dem Längsträger 12 gelagert, wie es mit einem Doppelpfeil 22 angedeutet ist. Die Zinken 14 können bei einer Ausführungsform individuell relativ zueinander in der X-Richtung (Längsrichtung) verstellt werden. Nicht alle Zinken 14 müssen längsverschieblich ausgebildet sein. In der nachfolgenden Beschreibung ist z.B. der mittlere Zinken 14 starr mit dem Längsträger 12 verbunden, so dass sich nur die relativ zum mittleren Zinken 14 innen liegenden Zinken 14 und die außen liegenden Zinken 14 in der Längsrichtung X bewegen lassen. Die Längsverschieblichkeit der Zinken 14 wird mit einem Breitenverstellantrieb 24 erreicht. In der Fig. 1 ist ein erster Breitenverstellantrieb 24-1 für die inneren Zinken 14 (d.h. den zweiten und vierten Zinken 14 von links) und ein zweiter Breitenverstellantrieb 24-2 für die äußeren Zinken 14 (d.h. den ersten und fünften Zinken 14) vorgesehen. Die inneren Zinken 14 und die äußeren Zinken 14 können dann jeweils symmetrisch zum mittleren Zinken 14 (d.h. zum dritten Zinken) bewegt werden. Es versteht sich, dass für jeden Zinken 14 ein separater Breitenverstellantrieb 24 vorgesehen werden kann. Eine symmetrische Verstellung ist nicht unbedingt erforderlich, hat aber Vorteile hinsichtlich der Anzahl der einzusetzenden Breitenverstellantriebe 24.

Die Linearförderer 18, die vorzugsweise in jedem Zinken 14 gelagert sind, können mit einem Linearfördererantrieb 26 vorwärts und rückwärts beweglich angetrieben werden. Vorzugsweise ist nur ein einziger Linearfördererantrieb 26 für alle Linearförderer 18 aller Zinken 14 vorgesehen. Dies hat den Vorteil, dass die Bewegungen der Linearförderer 18 synchron erfolgt. Da ein Ladegut üblicherweise von allen Zinken 14 getragen wird, ist eine synchronisierte Bewegung der Linearförderer 18 wünschenswert.

Die Zinken 14 selbst können wiederum relativ zum Längsträger 12 in der Querrichtung Z sowohl positiv als auch negativ verfahren werden. Dies wird mit einem Zinkenantrieb 28 erreicht, dessen Antriebswelle 60 vorzugsweise in Längsrichtung X durch den Längsträger 12 verläuft. Es können ein oder mehrere Zinkenantriebe 28 vorgesehen sein, wobei ein einziger Zinkenantrieb 28 bevorzugt ist, um auch die Querbewegung 20 der Zinken 14 zu synchronisieren.

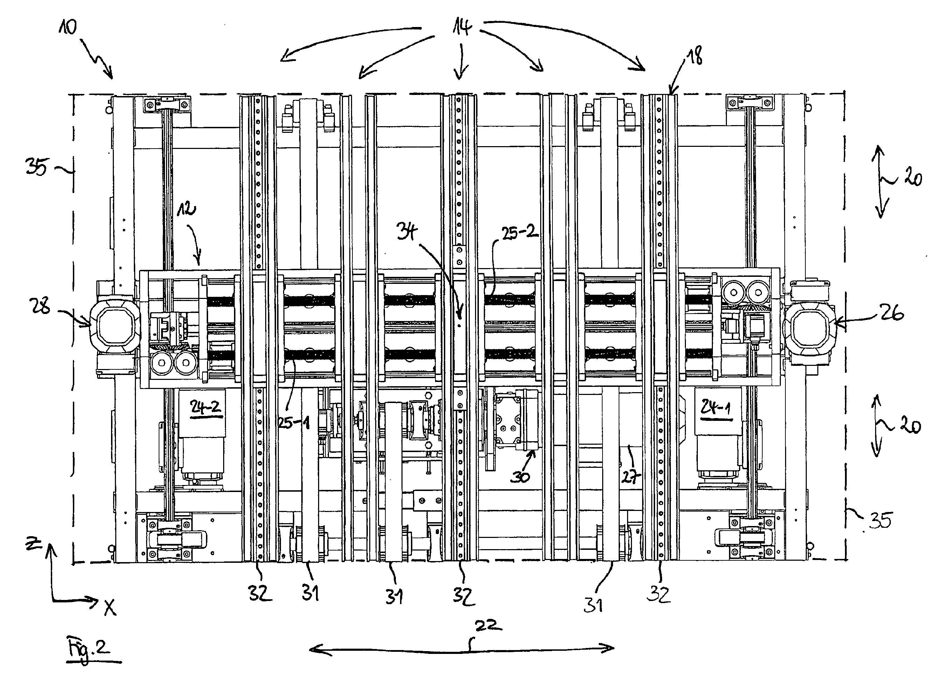

Der Längsträger 12 ist mittels eines Längsträgerantriebs 30, der in Fig. 1 nicht gezeigt ist, entlang von Linearführungen 32 in der Querrichtung Z relativ zu einem Hubwagen 35 verfahrbar, der in Fig. 2 durch eine Strichlinie angedeutet ist.

Der Längsträgerantrieb 30 ist in Fig. 2 gezeigt. Eine Abtriebswelle des Längsträgerantriebs 30 ist z.B. an ein oder mehrere Zahnriemen 31 gekoppelt, die wiederum fest mit der Wanne 13 verbunden sind und vorzugsweise in äußeren Bereichen (relativ zur Mitte in X-Richtung) angeordnet sind. Anstatt eines Zahnriemens 31 können alternativ auch Spindel, Ketten, Nockenexzenter oder Ähnliches eingesetzt werden. Die Wanne 13 ist entlang einer oder mehrerer der Linearführungen 32 längsverschieblich. In den Fig. 1 und 2 sind exemplarisch drei Linearführungen 32 gezeigt, die sich in der Querrichtung Z erstrecken und nahezu gleichmäßig in der Längsrichtung X zueinander beabstandet sind. Über die Linearführungen 32 erfolgt eine Befestigung des Lastaufnahmemittels 10 am Hubwagen 35. Die Zinken 14 sind üblicherweise so lang, wie der Hubwagen 35 breit ist. Das Gleiche gilt für die Länge der Linearführungen 32. Das gesamte Lastaufnahmemittel 10, und insbesondere der Längsträger 12, erstrecken sich im Wesentlichen über eine Gesamtlänge des Hubwagens 35, wie er in Fig. 2 angedeutet ist. Die Breite des Hubwagens 35 entspricht nahezu einer maximalen Einlagerungstiefe (Z-Richtung) in einem Lager, z.B. in einem Regal.

In der Draufsicht der Fig. 2 sind ferner zwei Spindeln 25 im Bereich der Wanne 13 gezeigt, die von den Breitenverstellantrieben 24 angetrieben werden. Anstatt einer Spindel können natürlich auch andere Elemente eingesetzt werden, wie z.B. Ketten, Zahnriemen oder Ähnliches. Die erste Spindel 25-1 kann z.B. den ersten und fünften Zinken 14 als Paar relativ zum dritten, mittleren Zinken 14 längsverschieblich 22 über den ersten Breitenverstellantrieb 24-1 antreiben. Eine zweite Spindel 25-2 kann dann den zweiten und vierten Zinken 14, d.h. das innen liegende Zinkenpaar, gemeinsam über den zweiten Breitenverstellantrieb 24-2 antreiben. Jeder Zinken 14 kann aber auch individuell angetrieben werden.

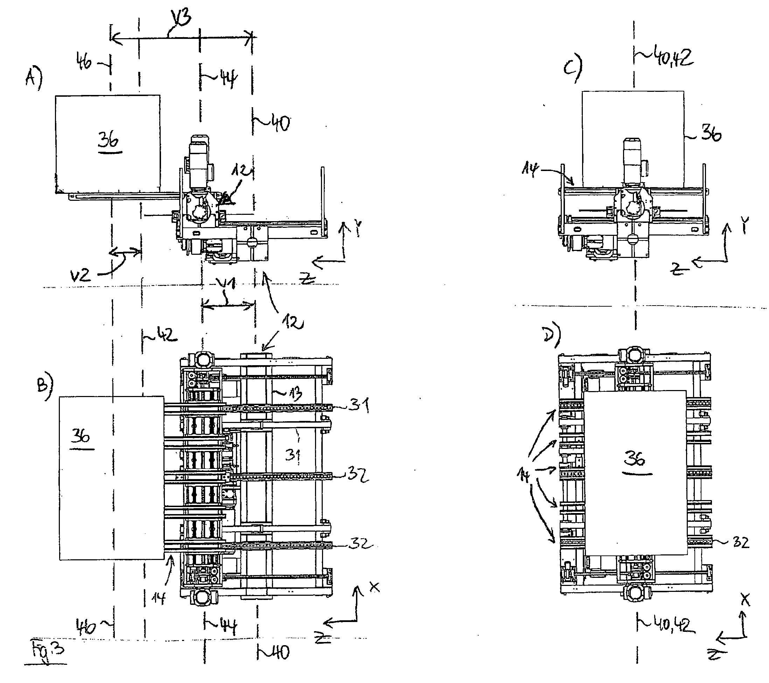

Somit gibt es drei Komponenten, die zu einer Bewegung eines Ladeguts 36 in der Z-Richtung beitragen. Zum einen kann der Längsträger 12 in einer ersten Z-Ebene quer (zur Längsrichtung X des Förderzeugs, an dem das LAM 10 angebracht ist) verfahren werden. Die Zinken 14 können wiederum quer 20 relativ zum Längsträger 12 in einer zweiten Z-Ebene verfahren werden. In einer dritten Z-Ebene können die Fördermittel der Linearförderer 18 in den Zinken 14 in Querrichtung Z bewegt werden. Diese Bewegungen sind exemplarisch in der Fig. 3 näher gezeigt.

Fig. 3A und 3B zeigen das LAM 10 der Fig. 1 und 2 in einem maximal in der Querrichtung Z, hier nach links, ausgefahrenen Zustand, wobei die Fig. 3A eine Seitenansicht und die Fig. 3B eine Draufsicht zeigt. Die Fig. 3C und 3D zeigen eine Normalstellung des LAM 10, bei der ein Ladegut 36 mittig zur Längsachse des LAM 10 positioniert ist, wobei die Fig. 3C eine Seitenansicht und die Fig. 3D eine Draufsicht der Normalstellung zeigt. Es versteht sich, dass die in den Fig. 3A und 3B gezeigte, nach links ausgerichtete Maximalstellung auch in der entgegengestezten Richtung (d.h. nach rechts) möglich ist. Außerdem kann jede beliebige Position zwischen der Normalstellung und der Maximalstellung mittels einer entsprechend eingerichtet Steuerung eingenommen werden. Auf diese Weise können in der Z-Richtung auch mehrere Ladegüter hintereinander ein- und ausgelagert werden.

In der Fig. 3 ist in Bezug auf die Z-Richtung eine Mittelachse 40 des Längsträgers 12 gezeigt, die eine absolute Z-Mitte darstellt. Ferner ist mit einer Hilfslinie 42 eine Mitte der Zinken 14 in Z-Richtung angedeutet. Mit den Hilfslinien 44 und 46 wird in den Fig. 3A und 3B verdeutlicht, dass der Längsträger 12 an seinem äußeren linken Ende (Hilfslinie 44) angekommen ist, wobei eine Mitte 46 des Ladeguts 36 mittels der Linearförderer 18 zur Mitte 42 der Zinken 14 versetzt ist. Der Versatz zwischen der Mitte 40 des LAM 10 und der Mitte 44 des Längsträgers 12 ist in Fig. 3A mit V1 bezeichnet. Der durch die Linearförderer 18 generierte Versatz der Mitte 46 des Ladeguts 36 relativ zur Mitte 42 der Zinken 14 ist in Fig. 3A mit V2 bezeichnet. Der vollständige Versatz der Mitte 40 des LAM 10 relativ zur Mitte 46 des Ladeguts 36 ist in Fig. 3A mit V3 bezeichnet. V3 entspricht der Summe aus V2 und zwei V1 (V3 = 2 x V1 + V2).

Aus einem Vergleich der Fig. 3A und 3B mit den Fig. 3C und 3D wird klar, dass der Längsträger 12 relativ zum Hubwagen 35 bzw. zu den daran befestigten Linearführungen 32, die Zinken 14 relativ zum Längsträger 12 und die Fördermittel (z.B. Riemen, Kette, Gliederband, etc) der Linearförderer 18 in den Zinken 14 in der Z-Richtung versetzt werden können. Die Fig. 3C und 3D zeigen das Ladegut 36 in seiner Transportstellung auf dem LAM 10, so dass ein hier nicht dargestelltes Förderzeug horizontal und/oder vertikal, d.h. entlang der X- und Y-Achsen, verfahren werden kann. Die Fig. 3A und 3B zeigen einen Zustand, bei dem das Ladegut 36 entweder gerade aufgenommen wurde oder kurz vor der Abgabe steht. Sowohl die Aufnahme als auch die Abgabe erfolgt durch einen Relativhub entlang der Y-Achse mittels dem hier nicht dargestellten Hubwerk des Förderzeugs.

Wie es nachfolgend noch detaillierter erläutert werden wird, sind die Linearförderer 18 mechanisch an die Zinken 14 gekoppelt, wobei die Linearförderer 18 auch unabhängig von den Zinken 14 in der Z-Richtung bewegt werden können.

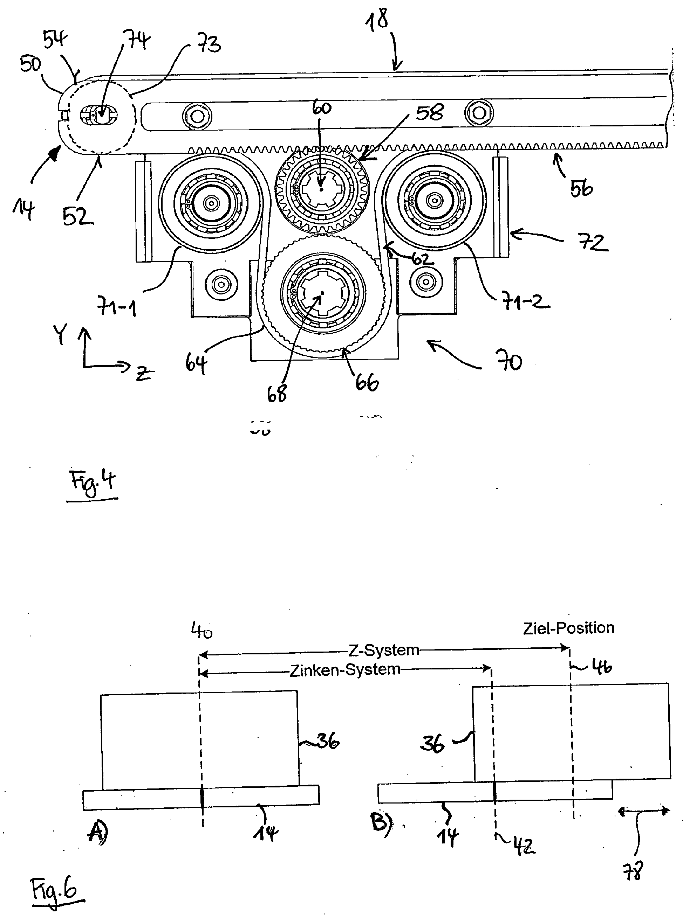

Fig. 4 zeigt eine Seitenansicht, in der ein Zinken 14 maximal nach rechts relativ zum Längsträger 12 ausgefahren ist, der in Fig. 4 wiederum nicht gezeigt ist. Der Zinken 14 ist nicht in seiner vollständigen Länge, sondern nur teilweise gezeigt. Der Zinken 14 kann (in X-Richtung) außen liegende Laschen 50 aufweisen, die mittels Bolzen 74 zueinander beabstandet sind. Die Bolzen 74 sind vorzugsweise in den äußeren Randbereichen (in Z-Richtung) der Zinken 14 vorgesehen und dienen als Lager für Umlenkrollen 30, die mittels Buchsen, Kugellagern etc. auf den Bolzen 74 sitzen können. Zwischen den benachbarten Laschen 50 ist der Linearförderer 18 angeordnet. Eine Unterseite des Zinkens 14 ist mit 52 bezeichnet. Eine Oberseite der Laschen 50 ist mit 54 bezeichnet. An der Unterseite 52 erstreckt sich nahezu über die gesamte Länge (in Z-Richtung) des Zinkens 14 ein Zahnprofil 56, und zwar zumindest bei einer der Laschen 50. Das Zahnprofil 56 kämmt mit einem Zahnrad 58, das Teil des Zinkenantriebs 28 ist. Der Zinkenantrieb 28 umfasst auch eine Antriebswelle 60, auf der das Zahnrad 58 drehfest montiert ist. Dreht sich die Antriebswelle 60, so wird über die kämmende Verzahnung des Zahnrads 58 mit dem Zahnprofil 56 eine Bewegung des Zinkens 14 relativ zu einem Sockel 72 bewirkt, in welchem die Antriebswelle 60 drehbar gelagert ist. Der Sockel 72 ist das Auflager des Zinkens 14 und ist zusammen mit ihm in der Wanne 13 des Längsträgers 12 längsverschieblich. Im Sockel 72 kann ferner eine Antriebswelle 68 des Linearfördererantriebs 26 drehbar gelagert sein, auf der ein Zahnrad 66 drehfest montiert ist. Das Zahnrad 66 kämmt nicht mit dem Zahnrad 58. Das Zahnrad 66 kämmt mit einem Zahnriemen 64, der das Zugmittel 62 des Linearförderers 18 bildet. Ferner können im Sockel 72 weitere Umlenkrollen 71 drehbar gelagert sein, um z.B. einen Omegaantrieb 70 zu bilden. Es versteht sich, dass der Linearförderer 18 auch durch einen anderen Antriebstyp in der Z-Richtung bewegt werden kann. Ferner versteht es sich, dass auch für den Zinken 14 eine andere Antriebsform als kämmende Zahnräder gewählt werden kann.

Die Zinken 14 können aber auch aus einem Vierkantprofil herausgearbeitet werden, wobei vorzugsweise die Ober- und/oder die Unterseite des Vierkantprofils in der Längsrichtung eine Ausnehmung bzw. Vertiefung aufweisen, um das Zugmittel 62 aufzunehmen und zu führen.

Der Sockel 72 ist Teil des Längsträgers 12, an den er z.B. über die Spindeln 25 mechanisch gekoppelt ist. Der Sockel 72 kann in Längsrichtung X relativ zur Wanne 13 bewegt werden.

Der Zahnriemen 64 wird vom Zahnrad 66 angetrieben und von den Umlenkrollen 71 in Richtung der weiteren Umlenkrollen 73 geführt, die an den äußeren Enden des Zinkens 14 gelagert sind. Alternativ können auch eine Kette mit einem Kettenrad oder Ähnliches eingesetzt werden.

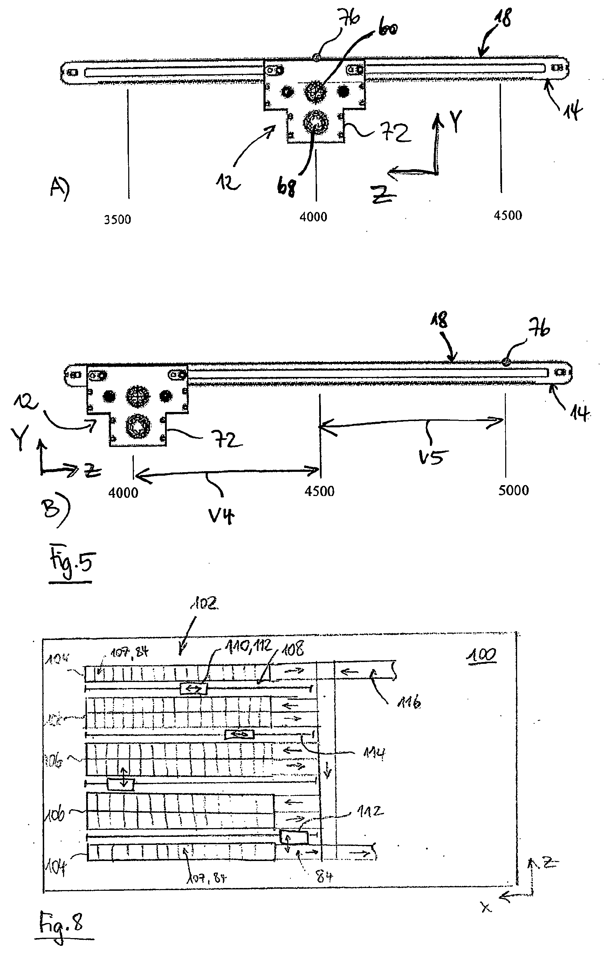

Fährt man den Zinken 14 aus der in der Fig. 4 gezeigten Stellung in die Mittenstellung gemäß der Fig. 3C und 3D zurück, so endet man in einer Stellung gemäß der Fig. 5A, auf die nachfolgend Bezug genommen wird. Die Fig. 5B zeigt den Zustand der Fig. 4 im Gesamten.

Die Fig. 5 dient zur Verdeutlichung, dass ein Ladegut 36, das auf dem Linearförderer 18 steht, doppelt so weit wie der Zinken 14 versetzt wird, selbst wenn der Linearförderer 18 nicht aktiv angetrieben wird, d.h. in Ruhe ist. Dies ist auf die mechanische Kopplung des Zinkens 14 mit dem Linearförderer 18 über das Zugmittel 62 zurückzuführen. Bewegt sich der Zinken 14 relativ zum Längsträger 12 (vgl. Versatz V4 in Fig. 5B), so bewegt sich ein Referenzpunkt 76 auf dem Zugmittel 62 um eine entsprechende Strecke in entgegengesetzter Richtung (vgl. Versatz V5 in Fig. 5B).

Je nach Länge des Zinkens 14 (in der Z-Richtung) muss mittels des Linearfördererantriebs 26 eine Gegenbewegung eingeleitet werden, um zu verhindern, dass das Ladegut 36 einen so großen Überhang 78, wie er exemplarisch in der Fig. 6B dargestellt ist, bekommt, dass das Ladegut 36 von dem Zinken 14 abstürzt. Es versteht sich, dass diese Bedingung stark von den Dimensionen und der Gewichtsverteilung des Ladeguts 36 abhängt. Die Dimensionen und die Gewichtsverteilung des Ladeguts 36 bestimmen die Lage des Schwerpunkts des Ladeguts 36. Wenn also allein durch den Versatz des Zinkens 14 ein zum Absturz führender Überhang 78 droht, kann der Linearfördererantrieb 26, und somit dessen Antriebswelle 78, so aktiv betätigt werden, dass der Referenzpunkt 76 im ausgefahrenen Zustand des Zinkens (vgl. Fig. 5B) weiter innen, d.h. näher zur Mitte 42 des Zinkens 14, liegt. Die Dimensionen und das Gewicht des Ladeguts 36 werden üblicherweise vorab an einem so genannten Identifikationspunkt der Gesamtanlage, z.B. im Wareneingang, bestimmt und sind in einer (übergeordneten) Steuerung hinterlegt, so dass z.B. eine speicherprogrammierbare Steuerung (SPS), die für die Steuerung des LAM 10 verantwortlich ist, jederzeit mit den relevanten Informationen gespeist werden kann. Natürlich kann der Linearfördererantrieb auch die eigentliche Bewegung unterstützen, d.h. gleich wie die Bewegung des Zinken 14 orientiert sein.

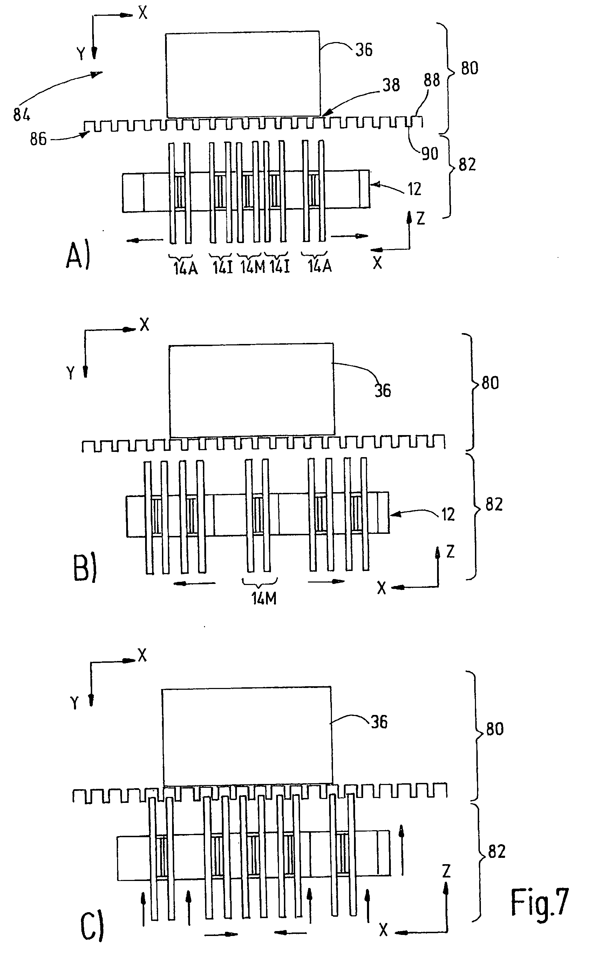

Bezug nehmend auf die Fig. 7A-7C ist ein exemplarischer Aufnahmevorgang in sequentiellen Schritten A)-C) gezeigt. Das Ladegut 36 kann auf Pappfüßen 38 stehen, die aber nicht zwingend erforderlich sind und weiterhin als "palettenlos" angesehen werden. Das Ladegut 36 steht an einem Übergabeplatz 84, z.B. in einem Regallagerplatz mit einem kammförmig ausgebildeten Fachboden 86. Der Fachboden 86 weist Täler 88 und Berge 90 auf. Das Ladegut 36 steht auf den Bergen 90.

In den Fig. 7A-7C stellt der obere Teil 80 der Figuren eine Seitenansicht des Übergabeplatzes 84 dar. Ein unterer Teil 82 stellt eine Draufsicht auf das LAM 10 dar.

In der Fig. 7A ist dargestellt, wie die äußeren Zinken 14A, die von einem gemeinsamen Breitenverstellantrieb 24 (nicht gezeigt) angetrieben werden, in der Längsrichtung X nach außen bewegt werden. Zuvor wurde das Förderzeug in X- und Y-Richtung vor dem Regalfach positioniert. In einer speicherprogrammierbaren Steuerung des Förderzeugs können für alle möglichen Lagerrasterpunkte ("Footprints") Positionswerte für die Zinken 14A hinterlegt werden.

Danach können die inneren Zinken 14I in der Längsrichtung X nach außen bewegt werden, wie es in Fig. 7B gezeigt ist. Der mittlere Zinken 14M ist starr, d.h. nicht in der X-Richtung beweglich. Es versteht sich, dass die Beschreibung der Fig. 7A-7C davon ausgeht, dass die Zinken 14 ursprünglich alle zusammengefahren sind, d.h. einen minimalen Abstand in der Längsrichtung X untereinander haben. Selbstverständlich können die Zinken 14 in der Ausgangsstellung auch anders zueinander positioniert sein. In Fig. 7C ist gezeigt, wie die inneren Zinken 14I in der Längsrichtung X auf den mittleren Zinken 14M zu bewegt werden.

Sobald die Zinken 14 so positioniert sind, dass sie den Tälern 88 im Fachboden 86 gegenüberliegen, können der Längsträger 12 und/oder die Zinken 14 in der Z-Richtung ausgefahren werden. Sobald die Zinken 14 das Ladegut 36 ausreichend weit untergreifen, kann mittels des Hubwerks des Regalbediengeräts eine Hubbewegung durchgeführt werden, um das Ladegut 36 anzuheben, d.h. vom Fachboden 86 zu trennen. Sobald die Zinken 14 aus den Tälern 88 herausgehoben wurden, können die Zinken 14 und der Längsträger 12 wieder in ihre Mittelposition eingefahren werden, wie es in den Fig. 3C und 3D gezeigt ist, da das Ladegut 36 dann auf den Zinken 14 steht.

Beim Abgeben eines Ladeguts 36 an einen Übergabeplatz 84 wird das Lastaufnahmemittel 10 zuerst in der X- und Y-Richtung positioniert. Anschließend werden der Längsträger 12 und die Zinken 14 ausgefahren. Vorzugsweise werden die Linearförderer 18 ebenfalls bewegt, und zwar insbesondere entgegengesetzt zur Bewegung des Längsträgers 12 und der Zinken 14. Es versteht sich, dass die Zinken 14 so positioniert werden, dass sie in die Täler 88 des Fachbodens 86 eingefahren werden können. Die Höhe des Ladeguts 36, d.h. die im ersten Schritt angefahrene Y-Position des LAM 10, ist dabei so gewählt, dass das Ladegut 36 bei ausgefahrenen Zinken 14 und ausgefahrenem Längsträger 12 nicht mit den Bergen 90 des Fachbodens 86 kollidiert.

Sobald das Ladegut 36 vollständig ausgefahren ist, kann mit dem Hubwerk eine Absenkbewegung eingeleitet werden, um das Ladegut 36 auf den Bergen 90 des Fachbodens 86 abzusetzen. Sobald das Ladegut 36 auf dem Fachboden 86 sitzt, kann die Absenkbewegung beendet werden und die Zinken 14 und der Längsträger 12 eingefahren werden. Sobald die Zinken 14 in der Z-Richtung den Fachboden 86 verlassen haben, kann das Förderzeug wieder Fahrt in der X- und Y-Richtung aufnehmen.

Die Übergabeplätze 84, und insbesondere die Regallagerfächer, werden in virtuelle Fachtiefen (Z-Richtung) eingeteilt. Dabei bestimmt eine kleinste Ladungstiefe das Fachraster und eine maximale Z-Koordinate. So können z.B.

Ladegüter 36 von 400 bis 1000 mm Ladungstiefe gehandhabt werden. Mit einer minimalen Ladungstiefe von 400 mm wäre im Lagerfach Platz für drei Ladegüter hintereinander. Jedoch kann mit dem LAM 10 ein 400 mm breites Ladegut maximal auf Tiefe gestellt werden, da sonst ein Überhang zu groß wird und die Ladung kippt (vgl. Fig. 6A und 6B). Damit kann sich ein Fachraster von z.B. 225 mm ergeben (= 0,5 x Ladungsbreite + 0,5 x Abstand).

Für eine Berechnung von Positionswerten der Zinken 14 sollte der Überhang 78 berücksichtigt werden. Allgemein gilt:

$$\text{Überhang} = [Z(\text{System}) + 0{,}5 \text{ x Ladungsbreite}] - [Z(\text{Zinkensystem}) + 0{,}5 \text{ x Zinkenlänge}]$$

Der zulässige maximale Überhang 78 wird Footprint-spezifisch definiert und hängt von einer Kippgefahr und einer Fußflächenpressung ab. Der Überhang kann zusätzlich von der Ladungsbreite und einem Ausfahrweg abhängen.

Alle obigen Angaben gehen von den exemplarischen Randbedingungen aus, dass eine Palettenbreite (bzw. -tiefe) zwischen 400 und 1200 mm liegt. Der Überhang soll größer als 50 mm sein, damit die Zinken 14 beim Einlagern keine Störkante für eine Durchschubsicherung oder Nachbarladung bilden. Bei der Steuerung des Linearfördererantriebs 26 ist es wichtig, dass während eines Positioniervorgangs des Gesamtsystems der Überhang 78 des Ladeguts 36 nie größer als ein vorgegebenes Maximum wird, da sonst die Gefahr besteht, dass das Ladegut 36 abstürzt.

In Fig. 8 ist eine Lageranlage 100 mit einem Regallager 102 gezeigt. Das Regallager 102 weist Einzelregale 104 und Doppelregale 106 auf. Die Doppelregale 106 bestehen aus zwei Einzelregalen 104, die Rücken an Rücken stehen. Die Regale 104 und 106 weisen jeweils eine Vielzahl von Regallagerplätzen 107 (Übergabeplätze 84) auf, die horizontal nebeneinander und vertikal übereinander angeordnet sind.

Zwischen den Regalen 104 und 106 befinden sich Regalgassen 108, in denen ein oder mehrere Förderzeuge 110 verfahrbar sind. Die Förderzeuge 110 sind hier in Form von Regalbediengeräten 112 implementiert, die horizontal schienengeführt verfahrbar sind. Die Regalbediengeräte 112 weisen einen oder mehrere Masten auf, entlang denen eine Hubeinheit vertikal verfahrbar ist. Die Hubeinheit weist einen Hubtisch bzw. -wagen 35 auf, an dem das LAM 10 der Erfindung befestigt ist. Das LAM 10 kann Ladegüter 36 in Querrichtung (Z-Richtung) mit den Übergabeplätzen 84 austauschen, wie es durch Pfeile in der Fig. 8 angedeutet ist.

Das Regallager 102 ist an eine Fördertechnik 116 (Rollenförderer, Gurtförderer, Gliederbandförderer, Lamellenförderer, etc.) angeschlossen. Die Fördertechnik 116 grenzt zum Beispiel stirnseitig an die Regale 104 und 106 an. Schienen 114 der Regalbediengeräte 112 sind so angeordnet, dass es überlappende Bereiche mit der Fördertechnik 116 gibt, um Ladegüter 36 auch zwischen dem RBG 112 und der Fördertechnik 116 austauschen zu können.

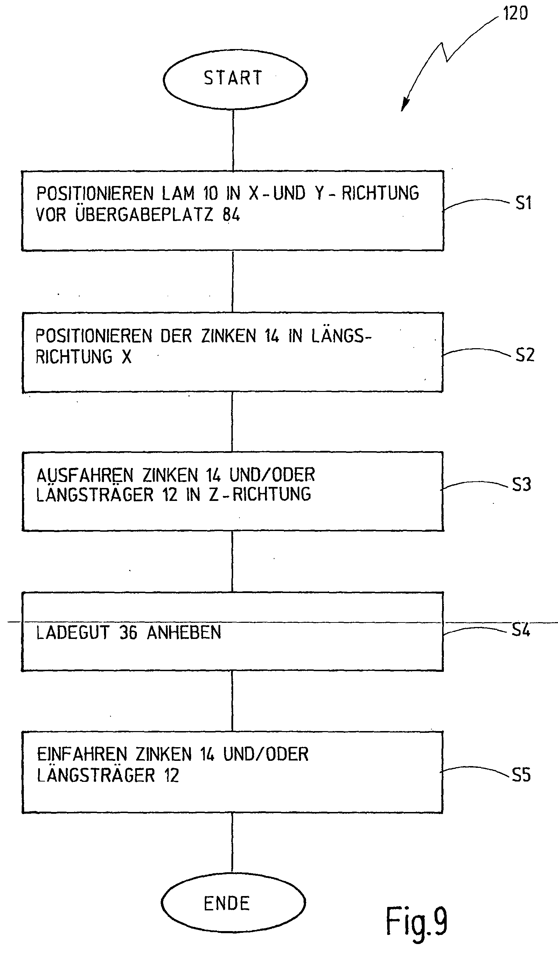

Fig. 9 beschreibt einen Vorgang 120, bei dem ein Ladegut 36 von einem Übergabeplatz 84 mittels des universellen Lastaufnahmemittels 10 der Erfindung aufgenommen wird.

In einem Schritt S1 wird das Lastaufnahmemittel 10 in der X- und Y-Richtung vor dem Übergabeplatz 84 positioniert, d.h. ausgerichtet. In einem Schritt S2 werden die Zinken 14 in der Längsrichtung X relativ zueinander positioniert, und zwar mittels des Breitenverstellantriebs 24. In einem Schritt S3 werden die Zinken 14 und/oder der Längsträger 12 in der Z-Richtung ausgefahren, um unter das Ladegut 36 zu greifen. In einem Schritt S4 wird das Ladegut 36 (vertikal) angehoben, um es vom Übergabeplatz 84 physisch zu trennen. In einem Schritt S5 werden die Zinken 14 und/oder der Längsträger 12 in der Z-Richtung eingefahren, um das Förderzeug 110 bzw. das LAM 10 horizontal bzw. vertikal verfahren zu können.

In der vorhergehenden Beschreibung der Erfindung wurden gleiche Teile und Merkmale mit gleichen Bezugszeichen versehen, wobei die in der gesamten Beschreibung enthaltenen Offenbarungen sinngemäß auf gleiche Teile und Merkmale mit gleichen Bezugszeichen übertragen werden können. Lage- und Orientierungsangaben, wie z.B. oben, unten, seitlich, längs, quer etc. sind auf die unmittelbar beschriebene Figur bezogen und bei einer Lage- bzw. Orientierungsänderung sinngemäß auf die neue Lage bzw. Orientierung zu übertragen.

**Patentansprüche**

1. Hubwagen (35) für ein Förderzeug (110), insbesondere ein Regalbediengerät (112), mit einem universellen Lastaufnahmemittel (10) zur palettenlosen Aufnahme und Abgabe eines Paletten-Ladeguts (36) von einem oder an einen Übergabeplatz (84), insbesondere einen Regallagerplatz (107), wobei das Ladegut (36) schwer ist und zum Ein- und Auslagern mittels eines Hubwerks des Förderzeugs (110) auf den Übergabeplatz (84) abgesenkt oder von dem Übergabeplatz (84) angehoben wird, wobei das Lastaufnahmemittel (10) aufweist:

   - einen Längsträger (12), der im Wesentlichen in einer Längsrichtung (X) orientiert ist;

- eine Vielzahl von Zinken (14), die im Wesentlichen in der Querrichtung (Z) orientiert sind und die mittels eines Zinkenantriebs (28) querverschieblich (20) auf dem Längsträger (12) gelagert sind, um die Zinken (14) in der Querrichtung (Z) relativ zum Längsträger (12) ein- und auszufahren; und

- eine Vielzahl von Linearförderein (18), die im Wesentlichen in der Querrichtung (Z) orientiert sind, wobei jedem Zinken (14) jeweils ein Linearförderer (18) zugeordnet ist, wobei die Linearförderer (18) mittels eines Linearfördererantriebs (26) bewegt werden und wobei die Linearförderer (18) vertikal über die Zinken (14) vorstehen, um das Ladegut (36) auf den Linearförderern (18) zu tragen und in der Querrichtung (Z) relativ zu den Zinken (14) zu bewegen;

wobei die Zinken (14) in der Längsrichtung (X) mittels eines Breitenverstellantriebs (24) längsverschieblich (22) zueinander auf dem Längsträger (12) gelagert sind; und

wobei jeder Linearförderer (18) ein in sich geschlossenes Zugmittel (62) aufweist, das mittels Umlenkrollen (73), die jeweils in einem der Zinken (14) gelagert sind, endlos um den einen Zinken (14) läuft; **dadurch gekennzeichnet, dass** der längstragen (12) mittels eines Längsträgerantriebs (30) in einer Querrichtung (Z) querverschieblich (20) auf dem Hubwagen (35) des Förderzeugs (110) befestigt ist und wobei das in sich geschlossene Zugmittel (62) den Linearförderer (18) derart mechanisch an den einen Zinken (14) koppelt, dass sich das Zugmittel (62) beim Ein- oder Ausfahren des einen Zinkens (14) mitbewegt, wobei die Bewegung des Zinkens (14) das Zugmittel (62) antreibt.

2. Hubwagen nach Anspruch 1, wobei sich der Langsträger (12) im Wesentlichen über eine gesamte Länge des Hubwagens (35) erstreckt und entlang von Linearführungen (32), vorzugsweise Schienen, auf dem Hubwagen (35) verfahrbar ist.

3. Hubwagen nach Anspruch 1 oder 2, wobei die Zinken (14) derart in der Längsrichtung (X) zueinander verfahrbar sind, dass die Zinken (14) im Wesentlichen an jeden beliebigen Punkt unter dem zur Aufnahme oder Abgabe bereitgestellten Ladegut (36) bewegbar sind.

4. Hubwagen nach einem der vorhergehenden Ansprüche, wobei die Zinken (14) paarweise (14M, 14I, 14A) vorgesehen sind.

5. Hubwagen nach einem der vorgehenden Ansprüche, wobei ein mittig angeordneter Zinken (14M) in der Längsrichtung (X) starr am Längsträger (12) befestigt ist und wobei nach außen nachfolgende Zinken (14I, 14A) paarweise mit jeweils einem gemeinsamen Breitenverstellantrieb (24) in der Längsrichtung (X), symmetrisch relativ zum mittig angeordneten Zinken (14M), versetzbar sind, wobei derart paarweise versetzbare Zinkenpaare (141, 14A) jeweils vorzugsweise über eine Spindel (25) miteinander gekoppelt sind, so dass paarweise versetzbare Zinkenpaare (141, 14A) entlang ihrer jeweiligen Spindel (25-1, 25-2) geführt sind.

6. Hubwagen nach einem der vorhergehenden Ansprüche, wobei der Linearfördererantrieb (26) eine Antriebseinheit (27) und eine Antriebswelle (68) aufweist, wobei die Antriebswelle (68) im Längsträger (12) gelagert ist.

7. Hubwagen nach einem der vorhergehenden Ansprüche, wobei eine Zinkenantriebswelle (60) des Zinkenantriebs (28) im Längsträger (12) gelagert ist.

8. Hubwagen nach Anspruch 7, wobei der Zinkenantrieb (28) ein Zahnrad (58) aufweist, das auf der im Längsträger (12) gelagerten Zinkenantriebswelte (60) sitzt und mit einem Zahnprofil (56) kämmt, das an einer Unterseite (52) eines jeden Zinkens (14) vorgesehen ist.

9. Regalbediengerät (112) mit einem Hubwerk und einem Hubwagen (35) gemäß einem der Ansprüche 1 bis 8.

10. Lageranlage (100) mit einem Regal (104, 106), einem Regalbediengerät (112) und einem Förderer (116), wobei das Regalbediengerät (112) nach Anspruch 9 ausgebildet ist und in der Längsrichtung (X) entlang des Regals (104, 106) in horizontaler und vertikaler Richtung (X, Y) verfahrbar ist, um Paletten-Ladegüter (36) palettenlos zwischen Regallagerplätzen (107) und dem Förderer (116) auszutauschen, der an das Regal (104, 106) angrenzt.

11. Verfahren zum palettenlosen Aufnehmen eines Paletten-Ladeguts (36) von einem Übergabeplatz (84) mittels eines Hubwagens (35) mit einem universellen Lastaufnahmemittels (10), wobei der Hubwagen nach einem der Ansprüche 1 bis 8 ausgebildet ist, mit den folgenden Schritten:

- Positionieren (S1) des Lastaufnahmemittels (10) in Längsrichtung (X) und Höhenrichtung (Y) vor einem Übergabeplatz (84);

- Positionieren (S2) der Zinken (14) in der Längsrichtung (X) mittels eines Breitenverstellantriebs (24), so dass die Zinken (14) unter jeden Punkt unter dem Ladegut (36) greifen können;
- Ausfahren (S3) des Längsträgers (12) und/oder der Zinken (14) in Querrichtung (Z), bis das Ladegut (36) ausreichend weit untergriffen ist;
- Bewegen (S4) des Lastaufnahmemittels (10) in der Höhenrichtung (Y) derart, dass das Ladegut (36) vom Übergabeplatz (84) abhebt; und
- Einfahren (S5) des Längsträgers (12) und/oder der Zinken (14), bis das Ladegut (36) in der Querrichtung (Z) in einer Transportposition ist.

## Claims

1. A lifting carriage (15) of an industrial truck (110), in particular of a storage and retrieval device (112), having a universal load-handling device (10) for palletlessly picking up and delivering pallet-loading goods (36) from a transfer space (84) or to the transfer space (84), particularly from or to a rack-storage space (107), wherein the loading good (36) is heavy and lowered to the transfer space (84) or lifted by means of a hoist unit of the industrial truck (110) from the transfer space (84) for the purpose of storage or retrieval, the load-handling device (10) comprising:

   - a longitudinal support (12), which is substantially oriented in a longitudinal direction (X);
   - a plurality of prongs (14), which are substantially oriented in the transverse direction (Z) and which are supported on the longitudinal support (12) in a transversally displaceable manner (20) by means of a prong drive (28), in order to extend and retract the prongs (14) in the transverse direction (Z) relative to the longitudinal support (12); and
   - a plurality of linear conveyors (18) which are substantially oriented in the transverse direction (Z), wherein respectively one of the linear conveyor (18) is assigned to one of the prongs (14), wherein the linear conveyors (18) are moved by means of a linear-conveyor drive (26), and wherein the linear conveyors (18) protrude vertically over the prongs (14), in order to carry the loading goods (36) on the linear conveyors (18) and to move the loading goods in the transverse direction (Z) relative to the prongs (14);

   wherein the prongs (14) are supported on the longitudinal support (12) in the longitudinal direction (X) by means of a width-adjustment drive (24) is fixed in a transverse direction (Z) on the lifting carrier (35) of the industrial truck (110) in a transversally displaceable (20) manner by means of a longitudinal-support drive (30) so that they are displacable longitudinally (22) to each other; and each of the linear conveyors (18) comprises a closed traction device (62), which runs in an endless manner around one of the prongs (14) by means of idler pulleys (73), which are respectively supported in the one of the prongs (14), **characterized in that** the longitudinal support (12) is fixed in a transverse direction (Z) on the lifting carrier (35) of the industrial truck (110) in a transversally displaceable (20) manner by means of a longitudinal-support drive (30) and wherein the closed traction device (62) couples the linear conveyor (18) mechanically to the one of the prongs (14) such that the traction device (62) is moved during retraction or extension of the one of the prongs (14), wherein the movement of the prong (14) drives the traction device (62).

2. The lifting carriage of claim 1, wherein the longitudinal support (12) substantially extends over an entire length of the lifting carriage (35) and is movable along linear-guiding devices (32), preferably rails, on the lifting carriage (35).

3. The lifting carriage of claim 1 or 2, wherein the prongs (14) are movable to each other in the longitudinal direction (X) such that the prongs (14) are substantially moveable to any arbitrary point beneath the loading good (36), which is provided for being picked-up or delivered.

4. The lifting carriage of one of the proceeding claims, wherein the prongs (14) are provided in pairs (14M, 14I, 14A).

5. The lifting carriage of one of the proceeding claims, wherein a centrally arranged prong (14M) is mounted rigidly to the longitudinal support (12) in the longitudinal direction (X), and wherein outward adjacent prongs (141, 14A) are displaceable in pairs by means of respectively one common width-adjustment drive (24) along the longitudinal direction (X) in a symmetric manner relative to the centrally arranged prong (14M), wherein prong pairs (14I, 14A), which are correspondingly displaceable, are coupled to each other preferably by means of a spindle (25) so that prong pairs (14I, 14A), which are displaceable in pairs, are guided along a respective spindle (25-1, 25-2) thereof.

6. The lifting carriage of one of the proceeding claims, wherein the linear-conveyor drive (26) comprises a drive unit (27) and a drive shaft (68), wherein the drive shaft (68) is supported in the longitudinal support (12).

7. The lifting carriage of one of the proceeding claims, wherein a prong-drive shaft (60) of the prong drive (28) is supported in the longitudinal support (12).

8. The lifting carriage of claim 7, wherein the prong drive (28) comprises a gear (58), which sits on the prong-drive shaft (60) supported in the longitudinal support (12), and meshes with a gear-tooth profile (56) provided at a bottom side (52) of each of the prongs (14).

9. A storage and retrieval device (112) having a hoist unit and a lifting carriage (35), in accordance with one of the claims 1 to 8.

10. A warehouse system (100) having a rack (104, 106), a storage and retrieval device (112), and a conveyor (116), wherein the storage and retrieval device (112) is formed in accordance with claim 9 and is moveable in the longitudinal direction (X) along the rack (104, 106) in horizontal and vertical directions (X, Y) for palletlessly exchanging pallet-loading goods (36) between rack-storage spaces (107) and the conveyor (116), which is arranged adjacent to the rack (104, 106).

11. A method for palletlessly picking up a pallet-loading good (36) from a transfer space (84) by means of a lifting carriage (15) of a universal load-handling device (10), which lifting carriage (15) is formed in accordance with one of the claims 1 to 8, comprising the steps of:

- positioning (S1) the load-handling device (10) in a longitudinal direction (X) and a height direction (Y) in front of a transfer space (84);
- positioning (S2) the prongs (14) in the longitudinal direction (X) by means of a width-adjustment drive (24) so that the prongs (14) can reach beneath any point under the loading good (36);
- extending (S3) the longitudinal support (12) and/or the prongs (14) in a transverse direction (Z) until the loading good (36) is sufficiently supported from below;
- moving (S4) the load-handling device (10) in the height direction (Y) such that the loading good (36) is lifted from the transfer space (84); and
- retracting (S5) the longitudinal support (12) and/or the prongs (14) until the loading good (36) is in a transport position in the transverse direction (Z).

**Revendications**

1. Chariot élévateur (35) pour un chariot de manutention (110), en particulier un transstockeur (112), comprenant un moyen de réception de charge universel (10) pour recevoir sans palette et déposer une marchandise à charger sur palette (36) depuis ou sur une place de transfert (84), en particulier une place de stockage de rayonnage (107), la marchandise à charger (36) étant lourde et étant abaissée sur la place de transfert (84) ou soulevée de la place de transfert (84) en vue de son insertion ou de sa sortie de stock au moyen d'un mécanisme de levage du chariot de manutention (110), le moyen de réception de charge (10) présentant :

- un support longitudinal (12), qui est orienté essentiellement dans une direction longitudinale (X) ;
- une pluralité de dents (14), qui sont orientées essentiellement dans la direction transversale (Z) et qui sont supportées au moyen d'un entraînement de dents (28) de manière déplaçable transversalement (20) sur le support longitudinal (12), afin de faire entrer et sortir les dents (14) dans la direction transversale (Z) par rapport au support longitudinal (12) ; et
- une pluralité de transporteurs linéaires (18) qui sont orientés essentiellement dans la direction transversale (Z), un transporteur linéaire (18) étant à chaque fois associé à chaque dent (14), les transporteurs linéaires (18) étant déplacés au moyen d'un entraînement de transporteurs linéaires (26) et les transporteurs linéaires (18) faisant saillie verticalement au-delà des dents (14) afin de porter la marchandise à charger (36) sur les transporteurs linéaires (18) et à la déplacer dans la direction transversale (Z) par rapport aux dents (14) ;

les dents (14) étant supportées sur le support longitudinal (12) dans la direction longitudinale (X) au moyen d'un entraînement de déplacement en largeur (24) de manière déplaçable longitudinalement (22) les unes par rapport aux autres ; et chaque transporteur linéaire (18) présentant un moyen de traction fermé en soi (62) qui s'étend sans fin au moyen de poulies de renvoi (73) qui sont à chaque fois supportées dans l'une des dents (14), autour de ladite une dent (14) ;

**caractérisé en ce que** le support longitudinal (12) est fixé au moyen d'un entraînement de support longitudinal (30) dans une direction transversale (Z) de manière déplaçable transversalement (20) sur le chariot élévateur (35) du chariot de manutention (110) et le moyen de traction fermé en soi (62) accouplant le transporteur linéaire (18) mécaniquement à ladite une dent (14) de telle sorte que le moyen de traction (62) se déplace conjointement lors de l'insertion ou de la sortie de ladite une dent (14), le déplacement de la dent (14) entraînant le moyen de traction (62).

2. Chariot élévateur selon la revendication 1, dans lequel le support longitudinal (12) s'étend essentiellement sur une longueur totale du chariot élévateur (35) et peut être déplacé le long de guides linéaires (32), de préférence des rails, sur le chariot élévateur (35).

3. Chariot élévateur selon la revendication 1 ou 2, dans lequel les dents (14) peuvent être déplacées les unes par rapport aux autres dans la direction longitudinale (X) de telle sorte que les dents (14) puissent être déplacées essentiellement en chaque point quelconque sous la marchandise à charger (36) prévue pour être reçue ou délivrée.

4. Chariot élévateur selon l'une quelconque des revendications précédentes, dans lequel les dents (14) sont prévues par paires (14M, 14I, 14A).

5. Chariot élévateur selon l'une quelconque des revendications précédentes, dans lequel une dent (14M) disposée centralement dans la direction longitudinale (X) est fixée rigidement au support longitudinal (12) et dans lequel des dents successives vers l'extérieur (14I, 14A) peuvent être déplacées par paires symétriquement par rapport à la dent disposée centralement (14M) avec à chaque fois un entraînement de réglage en largeur commun (24) dans la direction longitudinale (X), de telles paires de dents déplaçables par paires (14I, 14A) étant à chaque fois de préférence accouplées les unes aux autres par le biais d'une broche (25) de telle sorte que des paires de dents déplaçables par paires (14I, 14A) soient guidées le long de leur broche respective (25-1, 25-2).

6. Chariot élévateur selon l'une quelconque des revendications précédentes, dans lequel l'entraînement de transporteurs linéaires (26) présente une urtité d'entraînement (27) et un arbre d'entraînement (68), l'arbre d'entraînement (68) étant supporté dans le support longitudinal (12).

7. Chariot élévateur selon l'une quelconque des revendications précédentes, dans lequel un arbre d'entraînement de dents (60) de l'entraînement de dents (28) est supporté dans le support longitudinal (12).

8. Chariot élévateur selon la revendication 7, dans lequel l'entraînement de dents (28) présente une roue dentée (58) qui repose sur l'arbre d'entraînement de dents (60) supporté dans le support longitudinal (12) et s'engrène avec un profilé denté (56) qui est prévu au niveau d'un côté inférieur (52) de chaque dent (14).

9. Transstockeur (112) comprenant un mécanisme de levage est un chariot élévateur (35) selon l'une quelconque des revendications 1 à 8.

10. Instillation de stock (100) comprenant un rayonnage (104, 106), un transstockeur (112) et un transporteur (116), le transstockeur (112) étant réalisés selon la revendication 9 et pouvant être déplacé dans la direction longitudinale (X) le long du rayonnage (104, 106) dans la direction horizontale et verticale (X, Y) afin de transposer des marchandises à charger sur palette (36) sans palettes entre des places de stockage de rayonnages (107) et le transporteur (116) qui est adjacent au rayonnage (104, 106).

11. Procédé pour recevoir sans palette une marchandise à charger sur palette (36) depuis une place de transfert (84) au moyen d'un chariot élévateur (35) avec un moyen de réception de charge universel (10), le chariot élévateur étant réalisé selon l'une quelconque des revendications 1 à 8, comprenant les étapes suivantes :

- positionnement (S1) du moyen de réception de charge (10) dans la direction longitudinale (X) et la direction en hauteur (Y) devant une place de transfert (84) ;
- positionnement (S2) des dents (14) dans la direction longitudinale (X) au moyen d'un entraînement de réglage en largeur (24) de telle sorte que les dents (14) puissent s'engager sous chaque point en dessous de la marchandise à charger (36) ;
- sortie (S3) du support longitudinal (12) et/ou des dents (14) dans la direction transversale (Z) jusqu'à ce que la marchandise à charger (36) soit suffisamment saisie par le dessaus ;
- déplacement (S4) du moyen de réception de charge (10) dans la direction en hauteur (Y) de telle sorte que la marchandise à charger (36) soit soulevée de la place de transfert (84) ; et
- insertion (S5) du support longitudinal (12) et/ou des dents (14) jusqu'à ce que la marchandise à charger (36) dans la direction transversale (Z) soit dans une position de transport.

Fig.1

Fig. 2

Fig. 3

Fig.4

Fig.6

Fig.5

Fig.8

Fig.7

120

```
                    ┌─────────┐
                    │  START  │
                    └─────────┘
                         │
   ┌─────────────────────────────────────────────┐
   │ POSITIONIEREN LAM 10 IN X - UND Y - RICHTUNG │────── S1
   │ VOR ÜBERGABEPLATZ 84                         │
   └─────────────────────────────────────────────┘
                         │
   ┌─────────────────────────────────────────────┐
   │ POSITIONIEREN DER ZINKEN 14 IN LÄNGS-        │────── S2
   │ RICHTUNG X                                   │
   └─────────────────────────────────────────────┘
                         │
   ┌─────────────────────────────────────────────┐
   │ AUSFAHREN ZINKEN 14 UND/ODER                 │────── S3
   │ LÄNGSTRÄGER 12 IN Z - RICHTUNG               │
   └─────────────────────────────────────────────┘
                         │
   ┌─────────────────────────────────────────────┐
   │ LADEGUT 36 ANHEBEN                           │────── S4
   └─────────────────────────────────────────────┘
                         │
   ┌─────────────────────────────────────────────┐
   │ EINFAHREN ZINKEN 14 UND/ODER                 │────── S5
   │ LÄNGSTRÄGER 12                               │
   └─────────────────────────────────────────────┘
                         │
                    ┌─────────┐
                    │   ENDE  │
                    └─────────┘
```

Fig.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010090515 A1
- JP 59207304 B